# EUROPEAN PATENT SPECIFICATION

(11) **EP 0 274 228 B1**
(45) Date of publication and mention of the grant of the patent: **07.07.1993**
(21) Application number: 87310741.1
(22) Date of filing: 07.12.1987
(51) Int. Cl.: G02B 6/44, H01B 11/22

(54) **Optical cable connecting section in electric power and optical composite cable**
Optisches Kabelverbindungsteil für ein aus elektrischen und optischen Leitern bestehendes Kabel
Section optique de connexion d'un câble pour un câble composite comportant des guides électriques et optiques

(30) Priority: 05.12.1986 JP 288750/86
(43) Date of publication of application: 13.07.1988
(73) Proprietor: THE FURUKAWA ELECTRIC CO., LTD., Tokyo (JP)
(72) Inventor: Asada Yoshihisa c/o Chiba Works The Furukawa, Ichihara-shi Chiba-ken (JP); Iizumi Masahiro c/o Chiba Works The Furukawa, Ichihara-shi Chiba-ken (JP)
(74) Representative: Gibson, Stewart Harry

(56) References cited:
- EP-A- 0 067 673
- FR-A- 2 515 363
- GB-A- 2 169 093
- US-A- 4 359 262
- PATENT ABSTRACTS OF JAPAN, vol. 9, no. 83 (P-348)[1806], 12th April 1985; & JP-A-59 212 813
- PATENT ABSTRACTS OF JAPAN, vol. 10, no. 74 (P-439)[2131], 25th March 1986; & JP-A-60 212 709

## Description

This invention relates to a connection between a pair of optical cables in a composite electric power and optical cable.

Figure 5 shows an example of a conventional composite electric power and optical cable, being a submarine cable. This cable has three electric power cables 11, an optical cable 12, an intermediate layer 13 made, for example, of jute, a retaining layer 14 made of a winding of tape, a layer of tension members 15 and an external sheath 16.

As apparent in Figure 5, since the optical cable 12 is smaller in diameter than the power cable 11, the optical 12 is ordinarily disposed in the space between two adjacent power cables 11.

It is generally necessary to provide connections in the power cable and connections in the optical cable part way along such a submarine composite electric power and optical cable, because of the large length of the cable. In this case, it is desired to form the connections with outer diameters substantially the same as those of the power cable or the optical cable respectively so that the outer diameter of the entire cable does not vary along its length.

However, the connections of the optical cables must accommodate excess lengths of the optical fibres, to allow for correction when the interconnection of optical fibres fails, and the outer diameters of the connections in the optical cables become considerably larger than the outer diameters of the power cables owing to the accommodation of the excess lengths of optical fibres. As a result, the outer diameter of the composite cable is locally increased at the position of the connections in the optical cable, and this complicates the work of laying the composite cable, and there is a risk that an excessive external force might be applied to the connections in the optical cable.

JP 59 212 813 discloses a coupler made of copper which connects the free ends of two composite electrical power and optical cables. The coupler has reduced diameter annular portions provided for storing excess lengths of the optical fibre.

We have now devised a connection between a pair of optical cables in a composite electrical power and optical cable, which eliminates the drawbacks discussed above.

In accordance with this invention there is provided a connection between a pair of optical cables in a composite electrical power and optical cable, the connection comprising a member disposed between the ends of the connected optical cables, excess lengths of optical fibres extending from said optical cables being laid on the surface of said member, **characterised in that** said member is rod-like and relatively long excess lengths of optical fibres extending from said optical cables are disposed in curved grooves formed in the outer surface of said member and shorter excess lengths of the fibres are disposed in linear grooves formed in the surface of said member, said member being connected in series with tension members of the optical cables and said rod-like member having a diameter equal to or less than the diameter of said optical cables.

In the connection of the present invention, the optical fibres of both optical cables may be disposed in the curved or linear grooves of the rod-like member.

Whilst connecting the optical fibres, if the length of the fibre has not been reduced by making reconnections, then the excess lengths of optical fibres can be disposed in the curved grooves. However, if the lengths of the fibres has been reduced by making reconnections to rectify failed connections, then the shorter excess lengths of fibre can be disposed in the linear grooves of the rod-like member.

Thus, the optical fibres are neatly organised in the grooves of the rod-like member.

In the present invention, the rod-like member is not disposed on the outer periphery of the connection in the optical cable, but is disposed between the ends of the two optical cables. Therefore, the outer diameter of the connection in the optical cable is not increased relative to the diameter of the optical cable.

Further, the rod-like member is preferably relatively long, and the curved grooves formed in the outer peripheral surface of the rod-like member are also relatively long. Thus, the required excess lengths of the optical fibres can be contained in the curved grooves.

Preferably the optical fibres contained in the curved grooves or in the linear grooves of the rod-like member do not project outwards from the peripheral surface of the rod-like member.

The outer diameters of the connections in the optical fibre cable are accordingly minimised in accordance with the invention, and the outer diameter of the composite electric power and optical cable does not locally increase.

The above and other relates objects and features of the invention will be apparent from a reading of the following description of embodiments thereof, given with reference to the accompanying drawings, in which:
Figure 1 is a longitudinal sectional view schematically showing an embodiment of connection between optical cables in a composite electric power and optical cable;
Figures 2 and 3 are perspective views exemplifying examples of rod-like members used to hold excess lengths of optical fibres;
Figure 4 is a longitudinal sectional view showing another embodiment of connection between optical cables; and
Figure 5 is a cross-sectional view showing an example of a conventional composite electric power and optical cable.

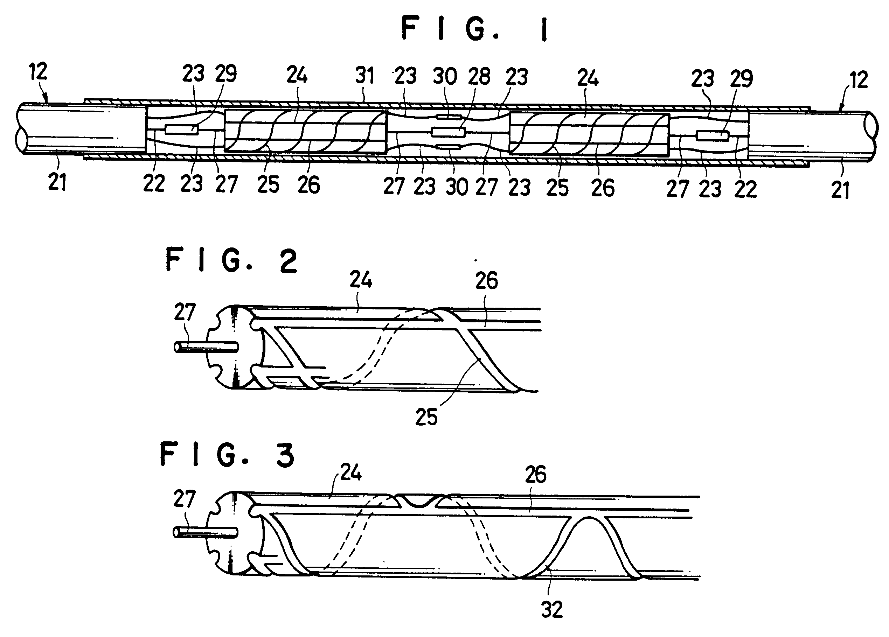

In Figure 1, the ends of metal sheaths 21 of optical cables 12 and 12 to be connected are cut back, and tension members 22 and optical fibres 23 of predetermined number extend from the ends of the metal sheaths 21 of the optical cables 12, 12.

The tension member 22 is cut near the end of the metal sheath 21, and the optical fibres 23 are provided with sufficient excess length for connection of the fibres of one cable to the fibres of the other cable.

Two rod-like members 24 are disposed coaxial with the optical cables 12, 12 and at a suitable interval between the optical cables 12 and 12.

Each rod-like member 24 has, for example, a structure as shown in Figure 2. More specifically, the rod-like member 24 has curved grooves 25 and linear grooves 26 for containing the optical fibres 23, and a tension member 27 integrally formed at the centre thereof. The curved groove 25 of this example is formed as a spiral following one direction.

One curved groove 25 and one linear groove 26 form a set. In order to readily understand the grooves, Figure 2 shows only one set of the curved and linear grooves 25 and 26, but the number of sets of the curved and linear grooves 25 and 26 corresponds to the number of the optical fibres 23 in each cable.

The tension members 27 of the rod-like members 24, 24, disposed at the centre between the ends of the optical cables 12 and 12, are connected with each other by a connector 28, and the tension members 27 of the rod-like members 24, 24, disposed adjacent the ends of the cables 12, 12, are connected to the tension members 22 of the respective optical cable 12 by connectors 29.

Pairs of optical fibres 23 from the ends of the respective optical cables 12, 12 are connected together at the centre i.e. between the two rod-like members 24 and 24, by connectors 30.

When the optical fibres are first connected together, the excess lengths of the optical fibres 23 are contained in the curved grooves 25.

When the first connection of the optical fibres fails, sufficient lengths of the optical fibres 23 are drawn from the curved grooves 25, and moved to the linear grooves 26, and a second connection of the optical fibres is performed.

Thus, when a connection fails, the connection can be performed several times again until the optical fibres 23 are all moved from the curved grooves 25 to the linear grooves 28.

After the connection of the optical fibres 23 is completed, a connecting conduit 31 is positioned between the metal sheaths 21 and 21 of the optical cables, and the ends of the connecting conduit 31 are fixed by bonding or welding to the metal sheaths 21, 21, respectively.

Figure 3 shows another example of the rod-like member 24 for holding the excess lengths of optical fibres. The rod-like member 24 of Figure 3 also has linear grooves 26 and curved grooves 32 formed in its outer peripheral surface. The curved grooves 32 of this example are formed as SZ spiral grooves i.e. they follow a spiral path which inverts direction periodically. In the example shown in Figure 3, the curved groove 32 inverts its direction after every turn around the rod-like member 24. However, the curved groove 32 may invert its direction after less than one turn. Thus, even after the optical fibres 23 are connected together, the optical fibres can be inserted into the curved grooves 32.

In case of the unidirectional spiral grooves 25, the optical fibres can be inserted into the grooves even after they have been connected together, if the spiral grooves of one rod-like member 24 are of opposite direction to those of the other rod-like member 24.

The optical fibre contained in a curved groove may cross an optical fibre contained in a linear groove. In order to avoid one fibre applying pressure to another fibre which it crosses, preferably the depths of the curved grooves and the linear grooves are different from each other and larger than the outer diameter of the optical fibre.

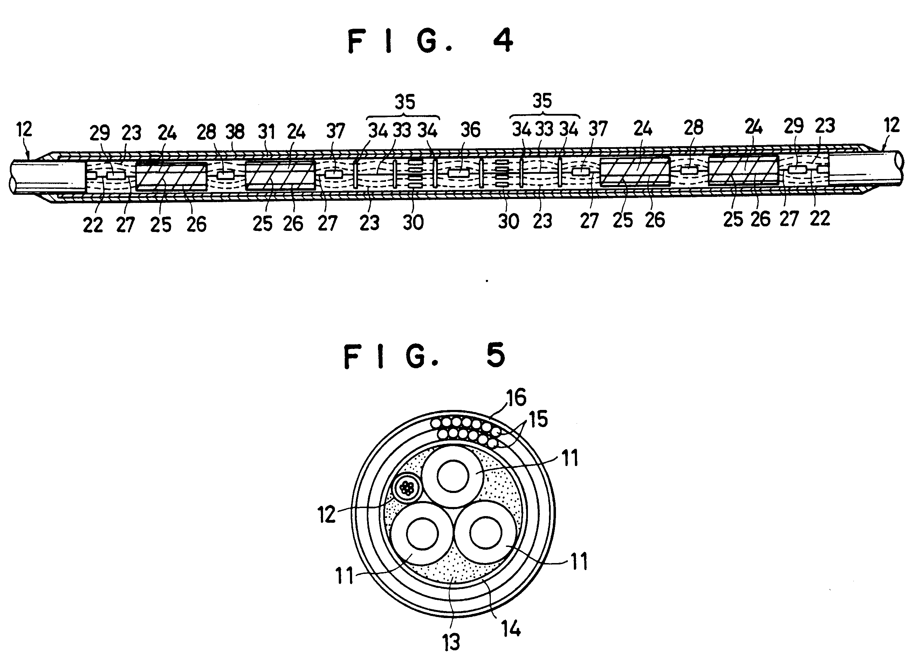

Figure 4 shows another embodiment, in which two rod-like members 24 are connected to the end of each optical fibre 12, to provide a total of four rod-like members 24 between the ends of the two optical cables 12 and 12. In the embodiment of Figure 4, a sufficient length of optical fibre, to remake a connection, can be obtained by shifting the optical fibre 23 from the curved groove 25 to the linear groove 26 in one of the members 24. Since two members 24 are provided at the end of each optical fibre 12, two failed connections may be allowed for each optical fibre.

In the embodiment in Figure 4, the interval between the two central rod-like members 24 is relatively large, and a plurality of axial centre holders 35, comprising disc-like spacers 34 integrated with a tension member 33, are interposed between the two central rod-like members 24 and 24.

The tension members 33 of adjacent axial centre holders 35 are connected together by a connector 36, and the tension members 33 disposed adjacent the rod-like members 24 are connected to the tension members 27 of the latter by connectors 37.

When a plurality of axial centre holders 35 are provided between the two central rod-like members 24 and 24, the optical fibre 23 may be slack between the spacers 34 of the axial centre holders 35, and the connectors 30 of the optical fibres 23 can be longitudinally displaced.

In addition, in the embodiment in Figure 4, the outer periphery of the conduit 31 is covered with a rubber or plastic corrosion proof conduit 38.

In order to prevent the optical fibres 23 from being contacted by the connecting conduit 31, a retaining layer (not shown), comprising a winding of tape, may be formed inside the connecting conduit 31, and jelly may fill the connecting conduit 31 so as to suppress the movement of the optical fibre to some degree.

In the embodiments described above, the curved groove may employ any shape, if the optical fibre can be limited to an allowable curvature (e.g. a minimum radius of curvature R = 40mm) when held in the curved groove. Preferably the groove follows a unidirectional spiral path or an SZ spiral path (i.e. a spiral which inverts its direction periodically, preferably within one turn around the rod-like member).

According to the present invention as described above, the excess lengths of the optical fibres can be stored in the linear and curved grooves in the outer peripheral surface of the rod-like members disposed between the ends of the optical cables. Therefore, the outer diameter of the composite electric power and optical cable is not locally increased by connections in the optical fibre cable, and the composite electric power and optical cable has a uniform outer diameter over its entire length.

## Claims

1. A connection between a pair of optical cables (12, 12) in a composite electric power and optical cable structure, the connection comprising at least one member (24) disposed between the ends of the connected optical cables (12, 12), excess lengths of optical fibres (23) extending from said optical cables (12, 12) being laid on the surface of said member (24), **characterised in that** said member (24) is rod-like and relatively long excess lengths of optical fibres (23) extending from said optical cables (12, 12) are disposed in curved grooves (25, 32) longitudinally formed in the outer surface of said member (24) and shorter excess lengths of fibres (23) are disposed in linear grooves (26) longitudinally formed in the surface of said member (24), said member (24) being connected in series with tension members (22) of the optical cables (12, 12) and said rod-like member (24) having a diameter equal to or less than the diameter of said optical cables (12, 12).

2. A connection as claimed in claim 1, **characterised in that** it comprises a plurality of said rod-like members (24), linearly spaced between the ends of said optical cables (12, 12) and connected in series between one another, said optical fibres (23) being connected between adjacent rod-like members (24) with relatively long excess lengths of the fibres (23) disposed in the curved grooves (25, 32) of said members (24) and shorter excess lengths of the fibres (23) disposed in the linear grooves (26) of said members (24), and with said plurality of members (24) connected in series with the tension members (22) of the optical cables (12, 12).

3. A connection as in Claim 2 **characterised in that** an even number of said rod-like members (24) are disposed in one line between the ends of the optical cables (12, 12).

4. A connection as claimed in any preceding claim, **characterised in that** the depths of the curved and linear grooves (25, 32) (26) formed in the or each rod-like member (24) are different from each other.

5. A connection as claimed in any preceding claim, **characterised in that** the curved grooves (25, 32) follow unidirectional spiral paths.

6. A connection as claimed in any of claims 1 to 4, **characterised in that** the curved grooves (25, 32) follow spiral paths which invert in direction within one turn around the or each rod-like member (24).

7. A connection as claimed in any preceding claim, **characterised in that** a plurality of curved grooves (25, 32) are formed on the or each rod-like member (24).

## Patentansprüche

1. Verbindung zwischen zwei optischen Kabeln (12, 12) in einem zusammengesetzten Aufbau mit elektrischem Leistungskabel und optischem Kabel, wobei die Verbindung wenigstens ein Glied (24) aufweist, das zwischen den Enden der verbundenen optischen Kabel (12, 12) angeordnet ist, wobei überschüssige Längenabschnitte von optischen Fasern (23), die sich von den optischen Kabeln (12, 12) erstrecken, auf die Oberfläche des Gliedes (24) gelegt sind, dadurch gekennzeichnet, daß das Glied (24) stabförmig ist und verhältnismäßig lange überschüssige Längenabschnitte von optischen Fasern (23), die sich von den optischen Kabeln (12, 12) erstrecken, in gekrümmten Nuten (25, 32) angeordnet sind, die in Längsrichtung in der äußeren Oberfläche des Gliedes (24) ausgebildet sind, und kürzere überschüssige Längenabschnitte von Fasern (23) in geraden Nuten (26) angeordnet sind, die in Längsrichtung in der Oberfläche des Gliedes (24) ausgebildet sind, wobei das Glied (24) mit Zuggliedern (22) der optischen Kabel (12, 12) in Reihe verbunden ist und das stabförmige Element (24) einen Durchmesser aufweist, der gleich dem Durchmesser der optischen Kabel (12, 12) oder kleiner als dieser Durchmesser ist.

2. Verbindung nach Anspruch 1, dadurch gekennzeichnet, daß sie eine Vielzahl von stabförmigen Elementen (24) aufweist, die geradlinig zwischen den Enden der optischen Kabel (12, 12) in Abständen angeordnet sind und miteinander in Reihe verbunden sind, wobei die optischen Fasern (23) zwischen benachbarten stabförmigen Gliedern (24) verbunden sind, wobei verhältnismäßig lange überschüssige Längenabschnitte der Fasern (23) in den gekrümmten Nuten (25, 32) der Glieder (24) und kürzere überschüssige Längenabschnitte der Fasern (23) in den linearen Nuten (26) der Glieder (24) angeordnet sind, und wobei die Vielzahl von Gliedern (24) mit den Zuggliedern (22) der optischen Kabel (12, 12) in Reihe verbunden ist.

3. Verbindung nach Anspruch 2, dadurch gekennzeichnet, daß eine gerade Anzahl der stabförmigen Elemente (24) in einer Reihe zwischen den Enden der optischen Kabel (12, 12) angeordnet ist.

4. Verbindung nach einem der vorangehenden Ansprüche, dadurch gekennzeichnet, daß die Tiefen der gekrümmten und geraden Nuten (25, 32) (26), die in dem stabförmigen Glied oder jedem stabförmigen Glied (24) ausgebildet sind, voneinander unterschiedlich sind.

5. Verbindung nach einem der vorangehenden Ansprüche, dadurch gekennzeichnet, daß die gekrümmten Nuten (25, 32) einseitig gerichteten Spiralbahnen folgen.

6. Verbindung nach einem der Ansprüche 1 bis 4, dadurch gekennzeichnet, daß die gekrümmten Nuten (25, 32) Spiralbahnen folgen, die ihre Richtung innerhalb einer Umdrehung um das oder jedes stabförmige Element (24) umkehren.

7. Verbindung nach einem der vorangehenden Ansprüche, dadurch gekennzeichnet, daß eine Vielzahl gekrümmter Nuten (25, 32) auf dem oder jedem stabförmigen Glied (24) gebildet ist.

## Revendications

1. Une connexion entre deux câbles optiques (12, 12) d'une paire dans une structure de câble composite comportant des guides électriques et optiques, la connexion comprenant au moins un élément (24) disposé entre les extrémités des câbles optiques (12, 12) connectés, des longueurs excédentes de fibres optiques (23) s'étendant à partir desdits câbles optiques (12, 12) étant posées sur la surface dudit élément (24),
caractérisée en ce que ledit élément (24) est en forme de barre, en ce que des longueurs excédentes relativement longues de fibres optiques (23) s'étendant à partir desdits câbles optiques (12, 12) sont disposées dans des rainures courbées (25, 32) formées longitudinalement sur la surface extérieure dudit élément (24) et en ce que des longueurs excédentes plus courtes de fibres (23) sont disposées dans des rainures linéaires (26) formées longitudinalement sur la surface dudit élément (24), ledit élément (24) étant connecté en série avec des éléments (22) de tension des câbles optiques (12, 12) et ledit élément (24) en forme de barre possédant un diamètre inférieur ou égal au diamètre desdits câbles optiques (12, 12).

2. Une connexion selon la revendication 1, caractérisée en ce qu'elle comprend une pluralité d'éléments (24) en forme de barre linéairement espacés entre les extrémités desdits câbles optiques (12, 12) et connectés en série les uns avec les autres, lesdites fibres optiques (23) étant connectées entre des éléments (24) en forme de barre adjacents, avec des longueurs excédentes relativement longues de fibres (23) disposées dans les rainures courbées (25, 32) desdits éléments (24) et des longueurs excédentes plus courtes de fibres (23) disposées dans les rainures linéaires (26) desdits éléments (24), et avec ladite pluralité d'éléments (24) connectés en série avec les éléments (22) de tension des câbles optiques (12, 12).

3. Une connexion selon la revendication 2 caractérisée en ce qu'elle comprend un nombre pair d'éléments (24) en forme de barre disposés sur une ligne entre les extrémités des câbles optiques (12, 12).

4. Une connexion selon l'une quelconque des revendications précédentes, caractérisée en ce que les profondeurs des rainures courbées (25, 32) et linéaires (26) formées dans le ou dans chaque élément (24) en forme de barre sont différentes les unes des autres.

5. Une connexion selon l'une quelconque des revendications précédentes, caractérisée en ce que les rainures courbées (25, 32) suivent des chemins unidirectionnels en spirale.

6. Une connexion selon l'une quelconque des revendications 1 à 4, caractérisé en ce que les rainures courbées (25, 32) suivent des chemins en spirale dont la direction s'inverse après chaque tour effectué autour du ou de chaque élément (24) en forme de barre.

7. Une connexion selon l'une quelconque des revendications précédentes, caractérisée en ce qu'une pluralité de rainures courbées (25, 32) sont formées dans le ou dans chaque élément (24) en forme de barre.
